# EUROPEAN PATENT APPLICATION

(11) **EP 4 224 400 A1**
(43) Date of publication of application: **09.08.2023**
(21) Application number: 20966077.8
(22) Date of filing: 21.12.2020
(51) Int. Cl.: G06Q 40/02, G06Q 30/02, G06K 9/00, G06F 3/041, H04L 12/12

(54) **VIRTUAL-DRIVER-BASED REMOTELY DRIVEN DIGITAL DESK, REMOTE FINANCIAL SERVICE PROVISION SYSTEM USING SAME, AND METHOD THEREFOR**

(30) Priority: 18.12.2020 KR 20200178120
(71) Applicant: HYOSUNG TNS INC., Seoul 06349 (KR)
(72) Inventor: KIM, Byung Ryong, Incheon 21036 (KR); BAEK, Yoon Kill, Seoul 07217 (KR); LEE, Joo Yong, Seoul 07539 (KR)
(74) Representative: V.O.
(86) International application number: PCT/KR2020/018831
(87) International publication number: WO 2022/131423

(57) **Abstract**

The present invention relates to a virtual-driver-based remotely driven digital desk, a remote financial service provision system using same, and a method therefor, and provides a remote financial service provision system, in which a digital desk, which is provided at general branches, unmanned automated branches, or the like of financial institutions such as banks to provide various financial services to customers who visit the branches, is configured to include: a video display for providing video of a representative who provides financial services from a remote location; and various devices such as scanners, printers and PIN pads required in the provision of financial services, so that the representative communicates with the digital desk from the remote location through a teller terminal, in which teller-dedicated software is installed, to remotely control the digital desk through a virtual driver installed on the teller terminal, and thus the representative can provide contact-free financial services from the remote location without having to directly face the customer and also effectively increase work efficiency by more efficiently using idle manpower of financial institutions.

## Description

### Technical Field

The present disclosure relates to a virtual driver-based remote-driving digital desk, and a system and method for providing remote financial services using the same and, more particularly, to a virtual driver-based remote-driving digital desk, which can provide financial services in an untact way at a remote place without the need for a counselor to come face to face with a customer and can also effectively enhance task efficiency by using idle manpower of a financial institution more efficiently, because in constructing the digital desk that is provided in a common branch or unmanned automation branch of a financial institution, such as a bank, and that provides various financial services to a customer who visits the branch, the digital desk is constructed to include a customer display for providing a financial service menu to a customer and receiving information from the customer, an image display for providing an image of a counselor who provides financial services at a remote place, and various devices necessary to provide financial services, such as a scanner, a printer, and a PIN pad, and is constructed to output a financial service menu to a customer who has visited the branch through the customer display and to provide, by a counselor, counseling and financial services based on a financial service menu selected by the customer through communication with the digital desk at a remote place through a teller terminal in which teller-dedicated software has been installed, and the teller terminal is constructed to have a virtual driver for controlling the driving of components that constitute the digital desk installed therein and to remotely control the digital desk through such a virtual driver, and a system for providing remote financial services using the virtual driver-based remote-driving digital desk.

### Background Art

In general, after an automatic teller machine (ATM) was introduced into the financial institution, customers of the financial institution have processed relatively simple financial task, such as the deposit and withdrawal of cash and account transfer which could be processed only in a counseling window of the existing financial institution, through the ATM.

However, in addition to the aforementioned task, in the case of tasks which require identification, such as the issuance of a bankbook, the opening of an account, and the submission of documents, or which require more complicated procedures, such as investment and loan counseling, the tasks are chiefly performed in a face-to-face manner between a customer and a counselor in a counseling window within a branch of the financial institution.

In the financial world, in a process of banks enhancing online services and gradually merging their branches, problems, such as the utilization of manpower and an increase of a customer waiting time attributable to customer face-to-face task congestion, emerge. Accordingly, attempts are made to reduce the waiting time of customers which may occur in a congestion branch or a congestion time zone and to improve a manpower utilization problem for investing idle manpower in the right place.

For example, as in Korean Patent Application Publication No. 10-2013-0142529, a manned/unmanned financial automation system in which a financial processor module for a bank clerk has been integrated within one independent space was disclosed. However, the system has a difficulty in effectively reducing the waiting time of a customer and enhancing customer convenience because the customer inevitably uses a manned consultation service in a video consultation room that is separately provided in the system in order to perform complicated financial tasks, such as self-verification and the submission of documents.

Furthermore, recently, an untact task tends to rapidly proceed on the whole society due to the spread of the COVID-19 virus. Likewise, even in the bank, there is an increasing untact need for tasks which require identification, such as the issuance of a bankbook, the opening of an account, and the submission of documents, or which require more complicated procedures, such as investment and loan counseling.

### Disclosure

### Technical Problem

The present disclosure has been made to solve the problems according to the conventional technology, and has an object of effectively enhancing task efficiency of a bank by allowing idle manpower within the bank to respond to a customer regardless of a difference between degrees of congestion for each branch and providing tasks which require identification, such as the issuance of a bankbook, the opening of an account, and the submission of documents, or which require more complicated procedures, such as investment and loan counseling, in a untact way at a remote place, because the digital desk is constructed to include a customer display for providing a customer with a financial service menu and receiving information from the customer, an image display for providing an image of a counselor who provides financial services at a remote place, and various devices necessary to provide financial services, such as a scanner, a printer, and a PIN pad, and is constructed to provide, by a counselor, counseling and financial services based on a financial service menu selected by a customer through communication with the digital desk at a remote place through a teller terminal in which bank teller-dedicated software has been installed and on which a virtual driver for controlling the driving of components that constitute the digital desk has been mounted.

### Technical Solution

In order to achieve the object, the present disclosure provides a remote-driving digital desk for providing untact financial services with a financial counselor to a customer who tries to use a financial service, wherein the digital desk includes a customer display configured to provide a customer with a financial service menu, an image display configured to output, to the customer, an image of a counselor who provides financial services, and multiple input devices and output devices in which the input and output of information required for financial transactions are performed, the digital desk includes a communication filter driver for the input of information to and the transmission and reception of control signals to and from a teller terminal of the counselor, and operations of the multiple input devices and output devices are remotely controlled by the teller terminal, and a system and method for providing remote financial services using the same.

### Advantageous Effects

The system for providing remote financial services using the virtual driver-based remote-driving digital desk according to the present disclosure has advantages in that task efficiency can be enhanced by efficiently using idle manpower and an unnecessary waiting time of a customer can be reduced because an idle counselor who waits is supported to be matched with a counseling request customer and performs an untact and remote counseling task depending on a task situation of the counselor.

Furthermore, the system for providing remote financial services using the virtual driver-based remote-driving digital desk according to the present disclosure has an effect in that various financial services can be provided at a remote place in an untact way without the need for a counselor to come face to face with a customer by constructing the system in which the counselor remotely controls driving of a digital desk at a remote place through the teller terminal on which the virtual driver and the teller-dedicated software have been mounted.

### Description of Drawings

FIG. 1 is a diagram illustrating a construction of a virtual driver-based remote-driving digital desk according to an embodiment of the present disclosure.
FIG. 2 is a diagram schematically illustrating a system for providing remote financial services using the virtual driver-based remote-driving digital desk according to an embodiment of the present disclosure.
FIG. 3 is a structure diagram of software that is installed in a teller terminal and the digital desk which constitute the system for providing remote financial services using the virtual driver-based remote-driving digital desk according to an embodiment of the present disclosure.
FIGS. 4 to 6 are flowcharts illustrating methods of providing financial services through the virtual driver-based remote-driving digital desk according to an embodiment of the present disclosure as examples.

### Best Mode for Invention

The present disclosure may be changed in various ways and may have various forms. Specific embodiments are illustrated in the drawings and are to be specifically described in the context.

It is however to be understood that the present disclosure is not intended to be limited to a specific disclosure form and that the present disclosure includes all changes, equivalents, and substitutions which fall within the spirit and technical scope of the present disclosure. Terms, such as a "first" and a "second", may be used to describe various components, but the components should not be limited by the terms. The terms are used to only distinguish one component from the other components. Likewise, a second component may be named a first component.

The terms used in this application are used to only describe specific embodiments and are not intended to restrict the present disclosure. An expression of the singular number includes an expression of the plural number unless clearly defined otherwise in the context. It is to be understood that in this application, a term, such as "include" or "have", is intended to designate the presence of a characteristic, a number, a step, an operation, a component, a part or a combination of them described in the specification and does not exclude the existence or possible addition of one or more other characteristics, numbers, steps, operations, components, parts or combinations of them in advance.

Hereinafter, embodiments of the present disclosure are described in detail with reference to the drawings, but the present disclosure is not limited to the following embodiments unless departing from the subject matter thereof.

### Mode for Invention

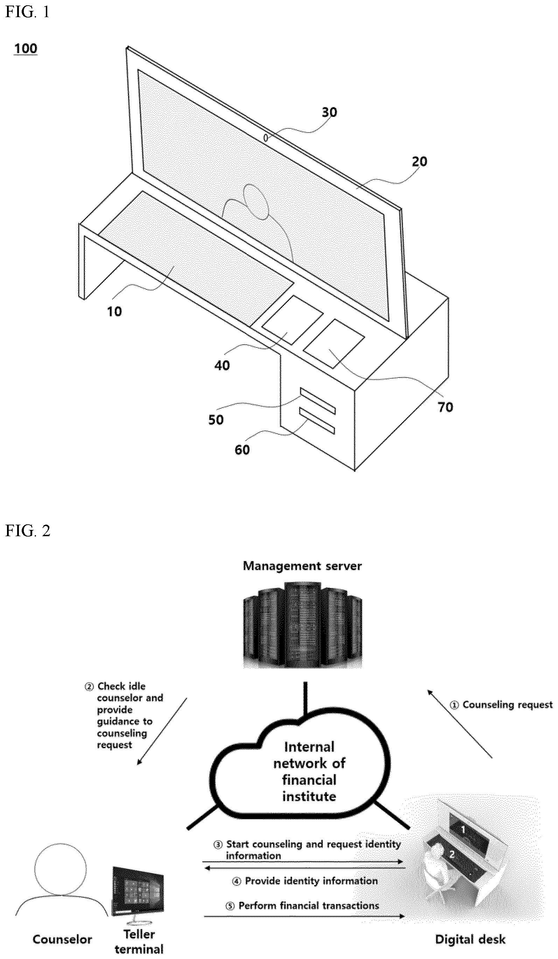

FIG. 1 is a diagram illustrating a construction of a virtual driver-based remote-driving digital desk according to an embodiment of the present disclosure.

As illustrated in FIG. 1, the virtual driver-based remote-driving digital desk 100 according to an embodiment of the present disclosure is constructed to include a customer display 10 for providing a financial service menu to a customer and receiving information from the customer, the image display 20 for outputting an image of a counselor who provides financial services at a remote place, and various input and output devices (hereinafter referred to as "devices"), such as a scanner, a printer, and a PIN pad for the input and output of information that is required for financial transactions.

The customer display 10 provides a customer with a financial service menu that is provided by a financial institution, such as a bank, by outputting the financial service menu in an image form, and supports the customer so that the customer may select the menu or input information.

In this case, the customer display 10 may include a touch screen, etc. but any display may be used without being limited if the display can output information in an image form or receive information.

As the financial service menu that is provided to the customer, various menus, such as the opening of an account, the issuance of a bankbook, the issuing of a card, and the registration of bio information, may be provided. In addition, a counseling request menu is separately provided to support a customer so that the customer is directly connected to a counselor through communication.

The image display 20 outputs an image of a counselor who responds to a customer at a remote place. The image display 20 may be equipped with a camera 30 for capturing an image of a customer and providing the image to a counselor.

The digital desk 100 may include various devices for the input and output of information that is required for financial transactions, and may include a scanner, a printer, and a PIN pad, for example, and are more specifically described below.

The scanner is chiefly provided for a task, such as the identification of a customer or the submission of documents, and is supported to scan bio information, such as a fingerprint, iris, or intestinal vein of a customer, or a document, such as a seal, a bankbook, or an identification card.

To this end, the scanner may be equipped with a bio information scanner 40, such as a fingerprint recognition device, an iris scanner, or an intestinal vein scanner for confirming identity information of a customer, and may also be equipped with a document scanner 50 for scanning a seal, a bankbook, or an identification card.

A printer 60 is provided to output various documents relating to financial transactions which are performed through the digital desk 100 between a customer and a counselor at a remote place.

In addition, the digital desk 100 may be additionally equipped with a bankbook issuance machine or a card issuance machine (not illustrated) for performing functions, such as the issuance of a bankbook or the issuing of a card according to remote financial transactions between a customer and a counselor.

A PIN pad 70 is an element that is provided for the opening of an account, the issuing of a card, or the input of a password when a password of an account or card is changed, and may be equipped with an EPP, that is, an encryption PIN pad module. The PIN pad may be integrated with the touch screen of the customer display 10 of the digital desk 100.

An individual device of the digital desk 100 is remotely controlled through a teller terminal of a counselor, which is disposed at a remote place. This is more specifically described with reference to FIG. 2.

As described above, the virtual driver-based remote-driving digital desk has an effect in that it provides a customer with financial services in an untact way, because the virtual driver-based remote-driving digital desk includes the customer display for providing a customer with a financial service menu and receiving information from the customer, the image display for outputting an image of a counselor who provides financial services at a remote place, and various devices, such as a scanner, a printer, and a PIN pad for the input and output of information that is required for financial transactions, and the devices are constructed to be remotely controlled through the teller terminal of a counselor, which is disposed at a remote place.

FIG. 2 is a diagram schematically illustrating a system for providing remote financial services using the virtual driver-based remote-driving digital desk according to an embodiment of the present disclosure.

The system for providing remote financial services according to the present disclosure is constructed through a communication connection between the teller terminal and the digital desk over an internal network of a financial institution.

The teller terminal is disposed at a remote place, and is used by a counselor to provide untact financial services to a customer which requests counseling. Software that was used by a counselor to perform a task in a terminal within a branch of a conventional financial institution, in addition to teller-dedicated software, is installed in the teller terminal without any change. The teller terminal is constructed to have a virtual driver for remotely controlling each device of the digital desk installed therein along with the software.

As described above, the digital desk includes the customer display for providing a financial service menu to a customer and receiving information from the customer, the image display for outputting an image of a counselor who provides financial services at a remote place, and various devices for the input and output of information that is required for financial transactions. The driving of each device is remotely controlled through a communication connection with the teller terminal.

The remote financial service system that is provided using the digital desk is schematically described with reference to FIG. 2. First, when a customer requests counseling with a counselor through the customer display of the digital desk (①), the counseling request of the customer is transferred to a management server over an internal network of a financial institution.

Likewise, the management server checks whether its own counselors wait, task types of the counselors, etc. over the internal network of the financial institution, and provides an idle counselor who is waiting in a corresponding task type with guidance to the counseling request of the customer ((2)).

The counselor starts counseling with the customer who uses the digital desk through the teller terminal, and requests identity information through the digital desk from the customer in order to provide financial services (③).

In response to the request for the identity information through the image display of the digital desk, the customer inputs various documents for identification, such as his or her own identification card, to the document scanner provided in the digital desk and scans the various documents or scans his or her fingerprint, iris, or intestinal vein through the bio information scanner, so that the identity information of the customer is input to the digital desk. The identity information of the customer scanned as described above is provided to the teller terminal over the internal network of the financial institution (④).

After confirming the identity information of the customer transmitted to the teller terminal, the counselor performs remote financial transactions with the customer through the digital desk ((5)).

In this case, remote financial services that are provided from the counselor to the customer through the digital desk may include various financial tasks which were performed in a counseling window of a conventional financial institution, such as the opening of an account, the issuance of a bankbook, the registration of bio information, and loan counseling.

Furthermore, the remote financial services according to the present disclosure support the use of a new customer in addition to the existing customer of a financial institution.

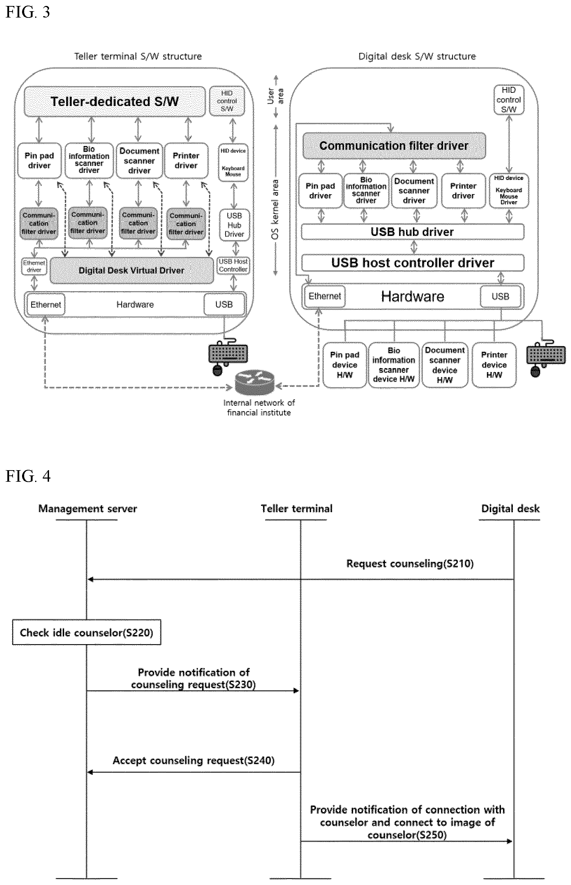

A method of providing financial services through the virtual driver-based remote-driving digital desk is more specifically described with reference to FIGS. 4 to 6.

FIG. 3 is a structure diagram of software that is installed in the teller terminal and the digital desk which constitute the system for providing remote financial services using the virtual driver-based remote-driving digital desk according to an embodiment of the present disclosure.

A software structure of the digital desk is first described. The digital desk is connected to various types of device hardware that are provided for identification, the submission and issuance of documents, etc. through a USB. The digital desk is equipped with a USB hub driver and a USB host controller driver along with each device driver for driving each device, and supports the devices of the digital desk so that the devices can be smoothly used.

Furthermore, a software structure installed in the teller terminal is described. As described above, each device driver, including teller-dedicated software that was used for a counselor to perform a task in a terminal within a branch of a conventional financial institution, is installed in the teller terminal. The teller terminal is constructed to have a virtual driver for remotely controlling each device of the digital desk installed therein along with the individual device driver.

The virtual driver virtualizes and displays the devices of the digital desk, such as a camera, a scanner, and a printer that constitute the digital desk, so that a counselor can control the devices of the digital desk through the teller terminal, and supports the counselor so that the counselor can control the driving of each virtualized device through the teller-dedicated software of the teller terminal, so that the counselor provides untact financial services by controlling the driving of each device of the digital desk at a remote place even without coming face to face with a customer.

Communication between components that constitute the digital desk within the digital desk is performed based on a USB signal. In contrast, communication between the digital desk and the teller terminal that remotely controls each device of the digital desk is performed through an Ethernet connection. Accordingly, communication signals between the two devices are transmitted and received in a TCP/IP packet format.

Accordingly, a communication filter driver, that is, means for converting a USB signal into a TCP/IP packet or converting a TCP/IP packet into a USB signal, is installed in each of the teller terminal and the digital desk. Accordingly, the teller terminal and the digital desk are constructed so that inter-device communication and communication between intra-device components are smoothly performed.

That is, when a counselor performs an operation of controlling the driving of each virtualized device of the digital desk in the teller terminal through the teller-dedicated software of the teller terminal, a driving control signal is transmitted up to the communication filter driver in the form of a USB signal, and is converted into TCP/IP packet capable of Ethernet communication through the communication filter driver. The TCP/IP packet is transmitted to the digital desk over the internal network of the financial institution.

The TCP/IP packet transmitted as described above is converted into a USB signal again through the communication filter driver of the digital desk. The converted USB signal is transmitted to each device of the digital desk, and controls the driving of each device in accordance with an operation that is instructed by the counselor through the teller terminal.

In contrast, in response to a request from a counselor, an event, such as the scanning of a document or an input to the PIN pad by a customer, occurs through various devices that are provided in the digital desk. When information that is input through the digital desk is transmitted to the teller terminal, the information that is input through the device provided in the digital desk is transmitted from each device within the digital desk to the communication filter driver as a USB signal, and is converted into a TCP/IP packet in the communication filter driver. After being transmitted to the teller terminal over the internal network of the financial institution, the TCP/IP packet is converted into a USB signal again through the communication filter driver that is provided in the teller terminal. Accordingly, the information input by the customer is output to the teller terminal of the counselor.

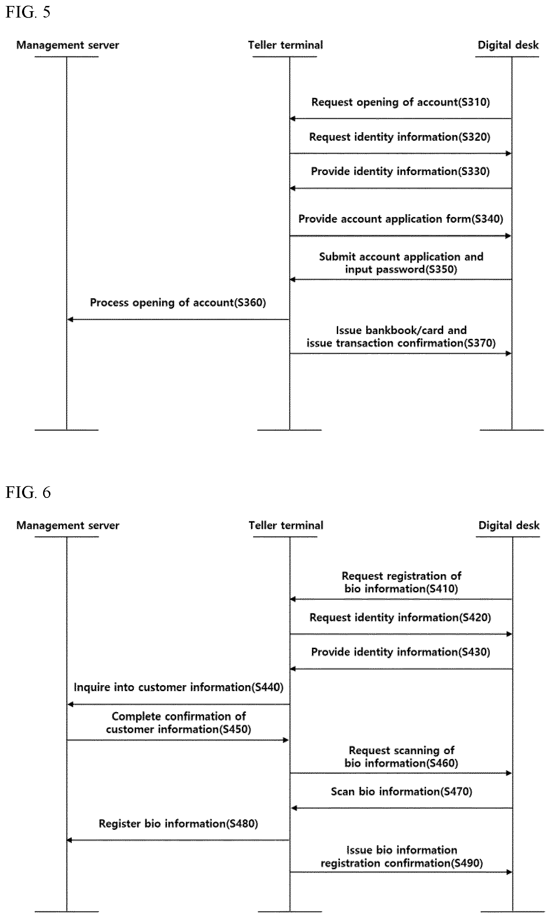

Communication between the teller terminal and the digital desk is performed as described above. Accordingly, remote control over the devices of the digital desk through the teller terminal is performed. FIGS. 4 to 6 are flowcharts illustrating methods of providing financial services through the virtual driver-based remote-driving digital desk according to an embodiment of the present disclosure as examples. FIG. 4 is a flowchart illustrating a process up to a step of an image connection being established with a counselor when a customer requests counseling with the counselor through the virtual driver-based remote-driving digital desk. FIG. 5 is a flowchart illustrating a process of opening, by the customer, an account of the customer through communication with the digital desk and the teller terminal of the counselor, which has been subjected to the image connection. FIG. 6 is a flowchart illustrating a process of registering, by the customer, his or her bio information through communication with the teller terminal of the counselor, which has been subjected to the image connection.

As illustrated in FIG. 4, when a customer operates the customer display of the digital desk and requests counseling with a counselor (S210), the counseling request of the customer is transmitted to the management server over the internal network of a financial institution. The management server checks an idle counselor who waits in a corresponding task type based on information, such as the present task situation of its own counselors, whether the counselors wait, and task types of the counselors (S220), and notifies the teller terminal of an idle counselor who is now waiting of the counseling request of the customer (S230).

The idle counselor who is waiting accepts the counseling request that is transmitted to his or her teller terminal (S240), transmits counselor connection information to the digital desk that is used by the customer, and simultaneously starts an image connection between the teller terminal of the counselor and the digital desk (S250).

The image connection between the teller terminal of the counselor and the digital desk that is used by the customer is performed through such a process. The counselor provides the customer with untact remote financial services through such a remote system. Hereinafter, a method of providing remote financial services between the teller terminal of the counselor, which has been subjected to the image connection, and the digital desk as described above is described as an example.

FIG. 5 is a flowchart illustrating a process of opening, by the teller terminal of the counselor that has been subjected to the image connection in FIG. 4 and the digital desk, an account of the customer through communication. When the customer requests the opening of an account, the counselor confirms the identity of the customer, and provides guidance to a procedure and documents necessary for the opening of the account. When the opening of the account is completed, the counselor issues, to the customer, documents and a bankbook or a card related to the opening of the account through the digital desk, so that financial transactions are completed.

This is more specifically described. First, when the customer with which the counselor has established the image connection has requests the opening of the account by performing the counselor connection process in FIG. 4 (S310), the counselor provides guidance to a customer identity information request (S320) by outputting the customer identity information request to the display of the digital desk for the identification of the customer. The customer provides his or her own identity information (S330) according to the identity information request guidance that is output to the display of the digital desk.

In this case, the provision of the identity information by the customer is performed through the digital desk. The customer may input identity information, such as a resident registration number, through the display or scan his or her fingerprint, iris, or intestinal vein by using the bio information scanner, or may provide the identity information through a method of scanning his or her own identification card or seal, etc. The identity information of the customer, which has been input to the digital desk as described above, is transmitted to the teller terminal of the counselor.

When the provision of the identity information by the customer is completed, the counselor provides an account application form to the digital desk that is used by the customer through the teller-dedicated software of the teller terminal (S340) and provides guidance to an account opening-related procedure. The customer inputs personal information, a password, etc. according to the account opening procedure that is provided through the customer display of the digital desk, and completes the submission of the account application (S350).

The digital desk transmits, to the teller terminal, the information that has been input as described above. The counselor checks the transmitted information, and performs processing for the opening of the account, such as registering the opened account with the management server of the financial institution (S360).

When such a procedure is completed, the teller terminal is constructed to output a transaction confirmation by remotely driving the printer of the digital desk and simultaneously to issue and provide a bankbook and/or a card to the customer through a bankbook issuing machine and/or a card issuing machine that is additionally provided in the digital desk.

FIG. 6 is a flowchart illustrating a process of registering, by the teller terminal of the counselor that has been subjected to the image connection in FIG. 4 and the digital desk, the bio information of the customer through communication. When the customer requests the registration of the bio information, the counselor confirms the identity of the customer, provides guidance to a procedure necessary for the registration of the bio information, and issues a registration confirmation when the registration of the bio information is completed, so that transactions are completed.

As illustrated in FIG. 6, when the customer with which the counselor has established the image connection by performing the counselor connection process in FIG. 4 requests the registration of his or her own bio information (S410), the counselor outputs a guidance screen that requests the identity information of the customer to the display of the digital desk (S420). The customer provides his or her own identity information according to the identity information request guidance that is output to the display of the digital desk (S430).

The provision of the identity information by the customer is performed through the digital desk. The customer may input identity information, such as a resident registration number, through the display or scan his or her fingerprint, iris, or intestinal vein by using the bio information scanner, or may provide the identity information through a method of scanning his or her own identification card or seal, etc. The identity information of the customer, which has been input to the digital desk as described above, is transmitted to the teller terminal of the counselor.

When the provision of the identity information by the customer is completed, in order to check financial information within the financial institution, such as the present condition of accounts held by the customer, the counselor inquires into customer information that has been stored in the management server of the financial institution based on the identity information of the customer, which has been transmitted to the teller terminal (S440). When the customer information including the present condition of accounts held by the customer is checked, the procedure of confirming the customer information is completed (S450).

The step of inquiring into and checking the customer information is for supporting the customer so that the customer selects an account, etc. for which bio information is registered and providing guidance to a procedure related to the selection, if the number of accounts owned by the customer is plural as a result of checking information, such as the present condition of accounts held by the customer. The step of inquiring into and checking the customer information is not performed in the case of a new customer not the existing customer.

Thereafter, when the counselor provides the display of the digital desk that is used by the customer with guidance to a procedure necessary for the registration of the bio information through the teller-dedicated software of the teller terminal and requests the scanning of the bio information (S460), the customer scans the bio information, such as his or her own fingerprint, iris, or intestinal vein, through the bio information scanner of the digital desk in accordance with the procedure of registering bio information, which is output to the display of the digital desk (S470). The scanned bio information of the customer is transmitted to the teller terminal.

In this case, in the process of the counselor providing the customer with guidance to the procedure necessary for the registration of the bio information, if the number of accounts owned by the customer is plural, the counselor supports the customer so that the customer selects an account for which the bio information is registered, and provides guidance to a procedure related to the selection.

The counselor registers the bio information of the customer, which has been transmitted through the teller terminal, with the management server (S480). When the registration of the bio information is completed, the counselor outputs and provides a bio information registration confirmation to the customer by remotely driving the printer of the digital desk.

**<Description of reference numerals>**

| | | | |
|---|---|---|---|
| 10: | customer display | 20: | image display |
| 30: | camera | 40: | bio information scanner |
| 50: | document scanner | 60: | printer |
| 70: | PIN pad | 100: | digital desk |

### Industrial Applicability

The virtual driver-based remote-driving digital desk according to the present disclosure has effects in that utilization efficiency of manpower can be improved and an unnecessary waiting time of a customer is reduced by providing financial services to the customer in an untact way and also checking idle manpower and checking and investing the idle manpower to a task, because the virtual driver-based remote-driving digital desk is constructed to include the customer display for providing a customer with a financial service menu and receiving information from the customer, the image display for outputting an image of a counselor who provides financial services at a remote place, and various devices necessary for the submission and issuance of various documents upon financial transaction, such as a scanner, a printer, and a PIN pad, and to have each device thereof to be remotely controlled through the teller terminal of a counselor, which is disposed at a remote place.

Furthermore, the system and method for providing remote financial services using the virtual driver-based remote-driving digital desk according to the present disclosure are constructed through a communication connection between the teller terminal and the digital desk. The virtual driver of the digital desk, that is, a virtualization driver for remotely controlling each device of the digital desk, is installed in the teller terminal along with each device driver including the teller-dedicated software that was used for a counselor to perform a task in a terminal within a branch of a conventional financial institution. The counselor is supported to control the driving of each virtualized device through the teller terminal. When a customer requests counseling with the counselor through the display of the digital desk, the management server checks whether counselors are waiting, task types of the counselors, etc., and notifies an idle counselor of the counseling request of the customer so that the counselor is supported to start the counseling through the teller terminal. Accordingly, the counselor can provide untact financial services by controlling an operation of each component of the digital desk at a remote place even without coming face to face with the customer.

## Claims

1. A remote-driving digital desk for providing untact financial services with a financial counselor to a customer who tries to use a financial service, the digital desk comprising:
a customer display configured to provide a customer with a financial service menu;
an image display configured to output, to the customer, an image of a counselor who provides financial services at a remote place; and
multiple input devices and output devices in which an input and output of information required for financial transactions are performed,
wherein the digital desk comprises a communication filter driver for an input of information to and a transmission and reception of control signals to and from a teller terminal of the counselor, and operations of the multiple input devices and output devices are remotely controlled by the teller terminal.

2. The remote-driving digital desk of claim 1, wherein the customer display comprises a touch screen and is constructed so that the customer selects a financial transaction menu or inputs financial information through the touch screen.

3. The remote-driving digital desk of claim 1, wherein the multiple input devices and output devices comprise a scanner, a printer, a PIN pad, a bankbook issuing machine, and a card issuing machine.

4. The remote-driving digital desk of claim 3, wherein the scanner comprises a document scanner for scanning a document, and a bio information scanner comprising a fingerprint recognition device and an intestinal vein scanner.

5. The remote-driving digital desk of claim 1, wherein the communication filter driver controls operations of the multiple input devices and output devices by converting input information that is received from the multiple inputs devices in a USB signal form into a TCP/IP packet for Ethernet communication with the teller terminal and converting a control signal that has a TCP/IP packet format and that is transmitted by the teller terminal through the Ethernet communication into a USB signal.

6. A teller terminal connected to a digital desk for providing untact financial services to a customer who tries to use financial services through Ethernet communication and configured to provide the customer with financial services by remotely controlling an operation of the digital desk, the teller terminal comprising:
teller-dedicated software for a financial counselor;
a virtual driver configured to control a driving of multiple input devices and output devices provided in the digital desk; and
a communication filter driver for an input of information to and a transmission and reception of control signals to and from the digital desk,
wherein the teller terminal is constructed to provide financial services to a customer by remotely controlling operations of multiple input devices and output devices provided in the digital desk by a financial counselor.

7. The teller terminal of claim 6, wherein the teller terminal generates a USB signal that controls operations of the multiple input devices and output devices provided in the digital desk through the virtual driver.

8. The teller terminal of claim 7, wherein the communication filter driver converts a USB signal generated by the virtual driver into a TCP/IP packet for Ethernet communication.

9. A system for providing remote financial services, for providing untact financial services with a financial counselor to a customer who tries to use the financial services by using a digital desk that is remotely driven by a teller terminal, the system comprising:
a digital desk comprising a customer display for providing a financial service menu to a customer, an image display for outputting, to the customer, an image of a counselor who provides financial services at a remote place, and multiple input devices and output devices in which an input and output of information required for financial transactions are performed; and
a teller terminal on which teller-dedicated software and a virtual driver for remotely driving the multiple input devices and output devices are mounted,
wherein the teller terminal and the digital desk each comprise a communication filter driver for converting a USB signal into a TCP/IP packet and a TCP/IP packet into a USB signal, and the teller terminal is constructed to provide a customer with financial services by remotely controlling operations of the multiple input devices and output devices through a control signal that is transmitted in a TCP/IP packet format through Ethernet communication.

10. The system of claim 9, wherein:
the teller terminal converts, into a TCP/IP packet, a USB control signal that is generated through the virtual driver and for controlling operations of the multiple input devices and output devices through the communication filter driver, and transmits the TCP/IP packet to the digital desk, and
the digital desk converts, into the USB control signal, the TCP/IP packet transmitted by the teller terminal through the communication filter driver and transfers the USB control signal to the multiple input devices and output devices.

11. The system of claim 9, wherein Ethernet communication between the teller terminal and the digital desk is performed over an internal network of a financial institution.

12. A method of providing untact financial services with a financial counselor to a customer who tries to use the financial services,
wherein a financial counselor connected to a customer through an image display provides the customer with financial services selected by the customer who has selected a service menu through a customer display by controlling operations of multiple input devices and output devices through a virtual driver installed in his or her teller terminal at a remote place, by using the digital desk for a customer, comprising the customer display for providing the customer with a financial service menu, the image display for outputting an image of the counselor who provides financial services to the customer at a remote place, and the multiple input devices and output devices that are remotely controlled through the virtual driver installed in the teller terminal of the financial counselor.

13. The method of claim 12, wherein an overall process of connecting the counselor to the customer who has selected the financial service menu through the image display and providing, by the connected counselor, financial services at a remote place is performed over an internal network of a financial institution.

14. The method of claim 13, wherein the internal network of the financial institution comprises a management server configured to check an idle counselor who provides services to the customer who has selected the financial service menu and to support the idle counselor and the customer so that the idle counselor and the customer are remotely connected.
